# EUROPEAN PATENT APPLICATION

(11) **EP 4 425 605 A1**
(43) Date of publication of application: **04.09.2024**
(21) Application number: 22911921.9
(22) Date of filing: 21.12.2022
(51) Int. Cl.: H01M 4/36, H01M 4/62, H01M 4/525, H01M 4/505, H01M 4/1391, H01M 4/04, H01M 10/052, C01G 53/00, H01M 4/38, H01M 4/48

(54) **METHOD FOR MANUFACTURING LITHIUM SECONDARY BATTERY, AND LITHIUM SECONDARY BATTERY MANUFACTURED THEREBY**

(30) Priority: 23.12.2021 KR 20210186454
(71) Applicant: LG Energy Solution, Ltd., Seoul 07335 (KR)
(72) Inventor: BAEK, So Ra, Daejeon 34122 (KR); PARK, Kang Joon, Daejeon 34122 (KR); JUNG, Wang Mo, Daejeon 34122 (KR); PARK, Sin Young, Daejeon 34122 (KR); HUR, Hyuck, Daejeon 34122 (KR); KIM, Dong Hwi, Daejeon 34122 (KR); KWAK, Min, Daejeon 34122 (KR); CHAE, Seul Ki, Daejeon 34122 (KR)
(74) Representative: Hoffmann Eitle
(86) International application number: PCT/KR2022/020951
(87) International publication number: WO 2023/121288

(57) **Abstract**

The present invention relates to a method for manufacturing a lithium secondary battery comprising the following steps (1) to (5), and a lithium secondary battery manufactured thereby.
(1) mixing a transition metal precursor and a lithium source material and then sintering the mixture to prepare a lithium composite transition metal oxide,
(2) mixing the lithium composite transition metal oxide with a cobalt-containing raw material and heat-treating the mixture at 550 °C to 700 °C to form a cobalt coating layer on the lithium composite transition metal oxide,
(3) mixing the lithium composite transition metal oxide on which the cobalt coating layer is formed with a boron-containing raw material and heat-treating the mixture at 400 °C to 500 °C to prepare a positive electrode active material including a boron coating layer,
(4) applying the positive electrode active material onto a positive electrode current collector to prepare a positive electrode, and
(5) assembling the positive electrode, the negative electrode including a silicon-based negative electrode active material, and a separator, and injecting an electrolyte.

## Description

### TECHNICAL FIELD

This application claims priority from Korean Patent Application No. 10-2021-0186454, filed on December 23, 2021, the disclosures of which are incorporated by reference herein.

The present invention relates to a method for manufacturing a lithium secondary battery and a lithium secondary battery manufactured thereby.

### BACKGROUND ART

The rapid popularization of battery powered electronics such as mobile phones, notebook computers, and electric vehicles has brought with it a rapidly rising demand for small, lightweight, and relatively high-capacity secondary batteries lately. Lithium secondary batteries in particular are taking center stage as a driving power source for portable devices because the lithium secondary batteries are lightweight and have high energy density. Accordingly, there have been extensive research and development efforts to improve the performance of lithium secondary batteries.

A carbon-based material such as graphite is mainly used as a negative electrode material for lithium secondary batteries, but the carbon-based material has low capacity per unit mass to make it difficult to achieve high-capacity lithium secondary batteries. Accordingly, as a non-carbon negative electrode material exhibiting higher capacity than the carbon-based material, a material forming an inter-metallic compound with lithium, such as silicon, tin, and an oxide thereof, has been developed and used, but these negative electrode materials have significant irreversible capacity loss during initial charge/discharge.

To prevent the limitations described above, a method for overcoming the irreversible capacity loss of the negative electrode by using a material which is capable of providing a lithium ion source or storage as a positive electrode material, and is electrochemically active after an initial cycle to prevent degradation in performance of an entire battery, has been studied and proposed. Specifically, there is a method of using, as a sacrificial positive electrode material or an overdischarge inhibitor, a lithium nickel-based oxide such as Li₂NiO₂ in the positive electrode.

However, the lithium nickel-based oxide is mostly expensive and produces a great deal of lithium by-products to generate a large amount of gas, and thus there is a demand for a method replacing the method described above.

### DISCLOSURE OF THE INVENTION

### TECHNICAL PROBLEM

An aspect of the present invention introduces a low-efficiency positive electrode material capable of compensating limitations caused by a negative electrode material having significant irreversible capacity loss during initial charge/discharge to ultimately provide a method for manufacturing a lithium secondary battery capable of increasing capacity without deterioration in resistance and lifespan characteristics.

### TECHNICAL SOLUTION

According to an aspect of the present invention, there is provided a method for manufacturing a lithium secondary battery, which comprises steps of:
(1) mixing a transition metal precursor and a lithium source material and then sintering the mixture to prepare a lithium composite transition metal oxide;
(2) mixing the lithium composite transition metal oxide with a cobalt-containing raw material and heat-treating the mixture at 550 °C to 700 °C to form a cobalt coating layer on the lithium composite transition metal oxide;
(3) mixing the lithium composite transition metal oxide on which the cobalt coating layer is formed with a boron-containing raw material and heat-treating the mixture at 400 °C to 500 °C to prepare a positive electrode active material including a boron coating layer;
(4) applying the positive electrode active material onto a positive electrode current collector to prepare a positive electrode; and
(5) assembling the positive electrode, the negative electrode including a silicon-based negative electrode active material, and a separator, and injecting an electrolyte.

In addition, according to another aspect of the present invention, there is provided a lithium secondary battery including a positive electrode including a positive electrode active material, a negative electrode including a silicon-based negative electrode active material, a separator, and an electrolyte,
the positive electrode active material includes a lithium composite transition metal oxide on which a cobalt coating layer and a boron coating layer are formed,
the positive electrode active material has a particle strength of 80 MPa to 250 MPa,
the positive electrode active material includes LiOH and Li₂CO₃ on a particle surface, and
a total amount of LiOH and Li₂CO₃ is 0.4 wt% to 1.1 wt% with respect to a total amount of the positive electrode active material.

### ADVANTAGEOUS EFFECTS

A method for manufacturing a lithium secondary battery according to the present invention uses a high-capacity silicon-based negative electrode active material, and compensates the limitation of irreversible capacity loss without a separate sacrificial positive electrode material to manufacture a lithium secondary battery having excellent capacity and lifespan.

### BRIEF DESCRIPTION OF THE DRAWINGS

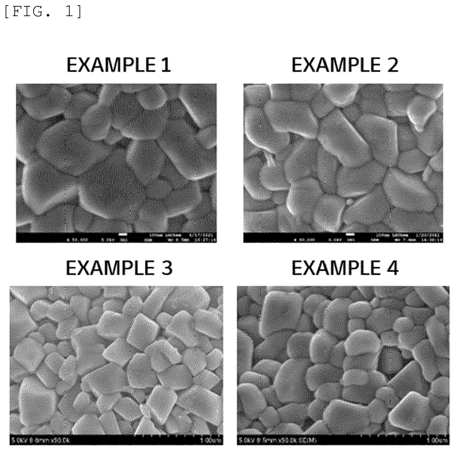

FIG. 1 shows images of surfaces of positive electrode active materials prepared in Examples 1 to 4, which are taken using a scanning electron microscope (SEM).

### BEST MODE FOR CARRYING OUT THE INVENTION

Hereinafter, the present invention will be described in detail to aid in understanding of the present invention.

In the present invention, the term "primary particle" indicates a particle unit having no observable grain boundaries when observed in a visual field of 5,000 to 20,000 magnification, using a scanning electron microscope. The term "average particle diameter of primary particles" indicates an arithmetic mean value calculated after measuring particle diameters of primary particles observed in scanning electron microscope images.

In the present invention, the term "secondary particle" is a particle in which a plurality of primary particles are aggregated.

In the present invention, the term "average particle diameter D₅₀" indicates a particle size with respect to 50% in the cumulative volume-based particle size distribution of lithium composite transition metal oxide powder or positive electrode active material powder, and indicates an average particle diameter of secondary particles. The average particle diameter D₅₀ may be measured using a laser diffraction method. For example, lithium composite transition metal oxide powder or positive electrode active material powder is dispersed in a dispersion medium, the dispersion medium is introduced into a commercial laser diffraction particle size measuring instrument (e.g., Microtrac MT 3000) and irradiated with ultrasonic waves having a frequency of about 28 kHz and an output of 60 W to obtain a cumulative volume-based particle size distribution curve, and the particle diameter corresponding to 50% of cumulative amount of volume may then be obtained.

In the present invention, the term "particle strength" is a value that expresses force when particles are broken by applying force to the corresponding positive electrode active material particles using a tip after putting positive electrode active material powder into a micro compression testing machine (Shimadzu Co., Ltd., MCT-W500) and securing a shape of the positive electrode active material particles to be measured using a microscope, in a unit of pressure (MPa). Values measured 30 times or more considering inter-particle variation are mapped, and an average value is used as a particle strength value.

A method for manufacturing a lithium secondary battery of the present invention includes the following steps (1) to (5) :
(1) mixing a transition metal precursor and a lithium source material and then sintering the mixture to prepare a lithium composite transition metal oxide;
(2) mixing the lithium composite transition metal oxide with a cobalt-containing raw material and heat-treating the mixture at 550 °C to 700 °C to form a cobalt coating layer on the lithium composite transition metal oxide;
(3) mixing the lithium composite transition metal oxide on which the cobalt coating layer is formed with a boron-containing raw material and heat-treating the mixture at 400 °C to 500 °C to prepare a positive electrode active material including a boron coating layer;
(4) applying the positive electrode active material onto a positive electrode current collector to prepare a positive electrode; and
(5) assembling the positive electrode, the negative electrode including a silicon-based negative electrode active material, and a separator, and injecting an electrolyte.

A silicon-based negative electrode active material having high capacity needs to be used to develop a high-capacity cell, but the silicon-based negative electrode active material has a low charge/discharge efficiency of less than 85%, and thus exhibits a high lithium ion loss rate due to an irreversible reaction. Accordingly, the lithium loss in the positive electrode active material may increase to cause a sharp decline in capacity of a battery during charge/discharge, and cause the collapse of a structure of the positive electrode active material.

Therefore, in the present invention, a low-efficiency positive electrode active material capable of providing lithium to a silicon-based negative electrode active material during initial charge/discharge is developed to prevent degradation in lifespan and resistance of a battery, even when an irreversible event in which lithium ions deintercalated from the positive electrode active material are not deintercalated after being inserted into the negative electrode active material takes place.

In addition, it is determined that adjusting coating conditions of cobalt increases the size of primary particles of the positive electrode active material to reduce an amount of fine powder generated upon electrode roll pressing and to improve lifespan at high temperature.

The method for manufacturing a lithium secondary battery according to the present invention provides a positive electrode material having improved output and exhibiting reduced consumption of lithium ions due to low initial charge/discharge efficiency by applying boron (B) and cobalt (Co) composite coating.

Hereinafter, each step will be described in detail.

### <Preparation of positive electrode active material>

The positive electrode active material of the present invention may be prepared through the above steps (1) to (3).

In the step (1), a transition metal precursor and a lithium source material are mixed and sintered to prepare a lithium composite transition metal oxide, and in this case, the precursor may be purchased and used as a commercially available precursor, or may be prepared according to a method for manufacturing a precursor known in the art.

For example, the precursor may be prepared by forming an ammonium cation complex with an aqueous transition metal solution and putting a basic compound into a reactor and stirring the added compound to perform a co-precipitation reaction.

The aqueous transition metal solution may be prepared by dissolving a transition metal-containing raw material in a solvent such as water and may be prepared, for example, by dissolving a nickel-containing raw material, a cobalt-containing raw material, a manganese-containing raw material, and/or an aluminum-containing raw material in water.

Meanwhile, the transition metal-containing raw material may be acetate, carbonate, nitrate, sulfate, halite, sulfide, or oxide of a transition metal.

Specifically, the nickel-containing raw material may be, for example, NiO, NiCO₃·2Ni(OH)₂·4H₂O, NiC₂O₂·2H₂O, Ni(NO₃)₂·6H₂O, NiSO₄, NiSO₄·6H₂O, nickel halide, or a combination thereof.

The cobalt-containing raw material may be, for example, CoSO₄, Co(OCOCH₃)₂·4H₂O, Co(NO₃)₂·6H₂O, CoSO₄·7H₂O, or a combination thereof.

The manganese-containing raw material may be, for example, Mn₂O₃, MnO₂, Mn₃O₄ MnCO₃, Mn(NO₃)₂, MnSO₄·H₂O, manganese acetate, manganese halide, or a combination thereof.

The aluminum-containing raw material may be, for example, Al₂O₃, Al(OH)₃, Al(NO₃)₃, Al₂(SO₄)₃, (HO)₂AlCH₃CO₂, HOAl(CH₃CO₂)₂, Al(CH₃CO₂)₃, aluminum halide, or a combination thereof. However, Al is allowed to be added together with a lithium raw material in a sintering step which will be described later without being added to the aqueous transition metal solution.

In this case, an input amount of each of the transition metal-containing raw materials may be determined in consideration of a molar ratio of the transition metal in the positive electrode active material to be finally produced.

Meanwhile, the ammonium cation complex forming agent may include at least one compound selected from the group consisting of NH₄OH, (NH₄)₂SO₄, NH₄NO₃, NH₄Cl, CH₃COONH₄, and (NH₄)₂CO₃, and may be put into a reactor in the form of a solution in which the compound is dissolved in a solvent. In this case, as the solvent, water, or a mixture of an organic solvent (specifically, alcohol, and the like) that may be uniformly mixed with water and water may be used.

The basic compound may be at least one compound selected from the group consisting of NaOH, KOH, and Ca(OH)₂, and may be put into a reactor in the form of a solution in which the compound is dissolved in a solvent. In this case, as the solvent, water, or a mixture of an organic solvent (specifically, alcohol, and the like) that may be uniformly mixed with water and water may be used.

As described above, when the aqueous transition metal solution, the ammonium cation complex forming agent, and the basic compound are put into a reactor and stirred, transition metals in the aqueous transition metal solution are coprecipitated to generate transition metal hydroxide-type precursor particles.

In this case, the aqueous transition metal solution, the ammonium cation complex forming agent, and the basic compound are added in an amount such that the pH of the reaction solution is within a desired range.

After the precursor particles are formed through the method described above, they are separated from the reaction solution to obtain a precursor. For example, the reaction solution may be filtered to separate a precursor from the reaction solution, and then the separated precursor may be washed with water and dried to obtain a precursor. In this case, as needed, a process such as grinding and/or classification may be performed.

As the lithium source material, lithium-containing sulfate, nitrate, acetate, carbonate, oxalate, citrate, halide, hydroxide, or oxyhydroxide may be used, and for example, Li₂CO₃, LiNO₃, LiNO₂, LiOH, LiOH·H₂O, LiH, LiF, LiCl, LiBr, LiI, CH₃COOLi, Li₂O, Li₂SO₄, CH₃COOLi, Li₃C₆H₅O₇, or a mixture thereof may be used.

Meanwhile, the lithium source material and the precursor may be mixed such that a molar ratio of Li to a total metal in the precursor is 1:1 to 1.2:1, preferably 1:1 to 1.1:1. When the mixing ratio of the lithium raw material and the metal in the precursor satisfies the above range, a layered crystal structure of the lithium composite transition metal oxide may be well developed to prepare a positive electrode active material having excellent capacity and structural stability.

The precursor and the lithium raw material may be mixed and then sintered at 700 °C to 800 °C to form a lithium composite transition metal oxide. More preferably, the mixture may be sintered at 710 °C to 780 °C, even more preferably at 730 °C to 760 °C, for 5 hours to 20 hours, more preferably for 8 hours to 15 hours. Meanwhile, as needed, a raw material containing a doping element M may be additionally mixed upon the sintering.

In the step (2), the lithium composite transition metal oxide is mixed with a cobalt-containing raw material, and the mixture is heat treated at 550 °C to 700 °C for 4 hours to 10 hours to form a cobalt coating layer on the lithium composite transition metal oxide. In the present invention, introducing the cobalt coating layer may reduce reactivity between a surface of a positive electrode active material and an electrolyte to suppress surface structure deterioration that may be caused in the course of charge/discharge processes, and to ultimately improve lifespan at high temperature and resistance increase. However, when the cobalt coating temperature is less than 550 °C, the cobalt coating layer is not properly formed and cobalt oxide is formed, which may cause a decrease in capacity and an increase in resistance.

The cobalt-containing raw material may be at least any one selected from the group consisting of Co₃O₄, Co(OH)₂, Co₂O₃, Co₃(PO4)₂, CoF₃, Co(OCOCH₃)₂·4H₂O, Co(NO₃)·6H₂O, Co(SO₄)₂·7H₂O, and CoC₂O₄.

A difference between the sintering temperature of the step (1) and the heat treatment temperature of the step (2) may be less than 100 °C. In this case, recrystallization of the lithium composite transition metal oxide may be performed during the heat treatment process of the step (2), and the size of primary particles may be increased by adjusting conditions of the step (2).

In addition, the heat treatment of the step (2) may include a first heat treatment, and a second heat treatment performed at a lower temperature than the first heat treatment. That is, the heat treatment may be performed in two stages, and specifically, the first heat treatment may be performed at 650 °C to 700 °C for 2 hours to 6 hours, and the second heat treatment may be performed at 550 °C to 650 °C for 1 hour to 3 hours. When the heat treatment is performed in two stages as described above, it is easier to control the size of primary particles than when the heat treatment is performed in a single stage at a constant temperature, and specifically, during the first heat treatment at high temperature, the crystal structure is recrystallized to increase the size of primary particles, and during the second heat treatment at low temperature, a cobalt coating layer is uniformly formed on a surface of the positive electrode active material.

In the step (2), the cobalt-containing raw material may be mixed in an amount of 0.5 wt% to 3 wt%, preferably 0.8 wt% to 2 wt%, more preferably 1.2 wt% to 1.8 wt%, with respect to a total amount of the lithium composite transition metal oxide. When the amount of the cobalt-containing raw material is 0.5 wt% to 3 wt% with respect to the total amount of the lithium composite transition metal oxide, it is preferable in that a uniform coating layer may be formed on the surface of the positive electrode active material and the movement of lithium is not disturbed during charge/discharge to suppress an increase in initial resistance.

In the step (3), the lithium composite transition metal oxide on which the cobalt coating layer is formed is mixed with a boron-containing raw material, and the mixture is heat-treated at 400 °C to 500 °C, preferably 420 °C to 480 °C, for 3 hours to 8 hours to prepare a positive electrode active material including a boron coating layer. Through the boron coating in the step (3), an LBO phase (lithium boron oxide phase) is formed on the surface of the positive electrode active material, and the LBO phase has high ionic conductivity, and may thus increase battery capacity and lower resistance, and also has low electrical conductivity, and may thus suppress side reactions between a surface of a positive electrode and an electrolyte. In particular, in the present invention, setting the heat treatment temperature in the step (3) to 400 °C or higher allows lithium in the lattice to move to a surface, and accordingly, an amount of residual lithium may increase and the residual lithium by-product may act as a resistance layer to reduce initial efficiency. However, when the temperature is greater than 500 °C, as lithium moves from the lattice to a surface, the available lithium is lost, which may significantly reduce capacity, and as the LBO phase is not uniformly formed on a surface of an active material and a portion of boron is present in the form of B₂O₃, residual lithium and capacity may decrease and resistance may increase during battery operation.

The boron-containing raw material may be at least one selected from the group consisting of H₃BO₃, B₂O₃, B₄C, BF₃, (C₃H₇O)₃B, (C₆H₅O)₃B, [CH₃(CH₂)₃O]₃B, C₁₃H₁₉O₃, C₆H₅B(OH)₂, and B₂F₄, and may preferably be H₃BO₃.

In the step (3), the boron-containing raw material may be mixed in an amount of 0.05 wt% to 0.5 wt%, preferably 0.07 wt% to 0.2 wt%, with respect to a total amount of the lithium composite transition metal oxide on which the cobalt coating layer is formed. When the amount of the boron-containing raw material is 0.05 wt% to 0.5 wt% with respect to the total amount of the lithium composite transition metal oxide on which the cobalt coating layer is formed, it is preferable in that a uniform coating layer may be formed on the surface of the positive electrode active material.

The mixing of the step (2) and the step (3) may be dry mixing without a solvent for each.

In the present invention, the lithium composite transition metal oxide may have nickel in an amount of 60 mol% or more, preferably 70 mol% or more, more preferably 80 mol% or more, among transition metals.

In addition, the lithium composite transition metal oxide may be represented by Formula 1.

[Formula 1] Li₁₊ₓ(NiₐCo_{b}Mn_{c}M_{d})O₂

In Formula 1,
M is at least any one element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
x, a, b, c, and d each satisfy -0.2≤x≤0.2, 0.50≤a<1, 0<b≤0.40, 0<c≤0.40, 0≤d≤0.1, and a+b+c+d=1.

In addition, preferably, a, b, c, and d each satisfy 0.60≤a<1, 0<b≤0.30, 0<c≤0.30, 0≤d≤0.1, or 0.70≤a<1, 0<b≤0.20, 0<c≤0.20, 0≤d≤0.1, or 0.80≤a<1, 0<b≤0.15, 0<c≤0.15, 0≤d≤0.05.

### <Preparation of positive electrode>

In the step (4) of the present invention, the positive electrode active material is applied onto a positive electrode current collector to prepare a positive electrode. This may be performed according to a typical method for manufacturing a positive electrode, except that the above-described positive electrode active material is used. Specifically, a positive electrode slurry including the above-described positive electrode active material, a binder, and a conductive material is applied onto the positive electrode current collector, and then dried and roll-pressed to prepare a positive electrode.

The positive electrode current collector is not particularly limited as long as it has conductivity without causing chemical changes in batteries, and for example, stainless steel, aluminum, nickel, titanium, sintered carbon, or aluminum or stainless steel that is surface-treated with carbon, nickel, titanium, silver, or the like may be used.

A solvent of the positive electrode slurry may be an organic solvent such as NMP (N-methyl-2-pyrrolidone), and may be used in an amount having a desired viscosity. For example, the solvent of the positive electrode slurry may be included in an amount such that a concentration of solid content in the positive electrode slurry is 10 wt% to 90 wt%, preferably 40 wt% to 85 wt%.

The binder in the positive electrode slurry is a component that assists in the binding between the positive electrode material and the conductive material and in the binding with the collector, and is commonly added in an amount of 1 wt% to 30 wt% with respect to the total weight of solid content in the positive electrode slurry. Examples of such binder may include polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene ter monomer, styrene-butadiene rubber, fluorine rubber, various copolymers thereof, and the like.

The conductive material in the positive electrode slurry is a material that provides conductivity without causing chemical changes in batteries, and may be added in an amount of 0.5 wt% to 20 wt% with respect to the total weight of solid content in the positive electrode slurry.

As the conductive material, carbon black such as acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; conductive powder such as fluorocarbon powder, aluminum powder, and nickel powder; conductive whiskers such as zinc oxide whiskers and potassium titanate whiskers; conductive metal oxide such as titanium oxide; polyphenylene derivatives, or the like may be used.

The positive electrode active material may be included in an amount of 80 wt% to 99 wt%, specifically, 90 wt% to 99 wt%, with respect to a total weight of solid content in a positive electrode slurry. In this case, when the amount of the positive electrode active material is 80 wt% or less, energy density may be lowered to reduce capacity.

### <Manufacture of lithium secondary battery>

The step (5) of the present invention includes assembling the positive electrode, the negative electrode including a silicon-based negative electrode active material, and a separator, and injecting an electrolyte. This may be performed according to a typical method for manufacturing a lithium secondary battery, except that the above-described positive electrode is used. For example, a separator is disposed between the positive electrode and the negative electrode including a silicon-based negative electrode active material, and sequentially stacked and dried to prepare an electrode assembly. Thereafter, the electrode assembly is inserted into a case and sealed by injecting an electrolyte to manufacture a lithium secondary battery.

A negative electrode according to the present invention includes a silicon-based negative electrode active material, and may be prepared by applying a negative electrode slurry including a negative electrode active material, a binder, a conductive material, and a solvent onto a negative electrode current collector, followed by drying and roll pressing.

The negative electrode current collector generally has a thickness of 3 um to 500 um. The negative electrode current collector is not particularly limited as long as it has a high conductivity without causing chemical changes in batteries, and for example, copper, stainless steel, aluminum, nickel, titanium, sintered carbon, copper or stainless steel which is surface-treated with carbon, nickel, titanium, silver, or the like, an aluminum-cadmium alloy, or the like may be used. In addition, as in the positive electrode current collector, the negative electrode current collector may have fine irregularities on a surface thereof to improve bonding strength of a negative electrode active material, and the negative electrode current collector may be used in various forms such as a film, a sheet, a foil, a net, a porous body, a foam body, and a non-woven fabric body.

In the present invention, the silicon-based negative electrode active material may be at least any one selected from the group consisting of Si, SiOₓ (0<x<2), and an Si-containing alloy, and may preferably be SiO.

The Si-containing alloy may be an alloy of Si and an element selected from an alkali metal, an alkaline earth metal, a Group 13 element, a Group 14 element, a transition metal, a rare earth element, and a combination thereof.

The silicon-based negative electrode active material has a capacity nearly 10 times higher than that of graphite to lower mass loading (mg·cm⁻²), thereby improving quick charging performance of batteries. However, the silicon-based negative electrode active material exhibits a high lithium ion loss rate due to an irreversible reaction, and this may be prevented by applying the positive electrode described above.

The negative electrode of the present invention may further include a carbon-based negative electrode active material in addition to the silicon-based negative electrode active material. Any carbon-based negative electrode active material generally used in a lithium ion secondary battery may be used without particular limitation, and, as a typical example, crystalline carbon, amorphous carbon, or both thereof may be used. Examples of the crystalline carbon may be graphite such as irregular, planar, flaky, spherical, or fibrous natural graphite and artificial graphite, and examples of the amorphous carbon may be soft carbon (low-temperature sintered carbon), hard carbon, mesophase pitch carbide, and sintered cokes.

In the present invention, the silicon-based negative electrode active material may be included in an amount of 1 wt% to 100 wt%, preferably 3 wt% to 10 wt%, with respect to a total weight of the negative electrode active material.

The negative electrode active material may be included in an amount of 80 wt% to 99 wt% with respect to a total weight of solid content in a negative electrode slurry.

The binder is a component that assists in binding between a conductive material, a negative electrode active material, and a collector, and may be commonly added in an amount of 1 wt% to 30 wt% with respect to the total weight of solid content in the negative electrode slurry. Examples of such binder may include polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer, styrene-butadiene rubber, fluorine rubber, various copolymers thereof, and the like.

The conductive material is a component for further improving conductivity of the negative electrode active material, and may be added in an amount of 1 wt% to 20 wt% with respect to the total weight of solid content in the negative electrode slurry. Such conductive material is not particularly limited as long as it has conductivity without causing chemical changes in batteries, and for example, a conductive material, such as: carbon black such as acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; conductive powder such as fluorocarbon powder, aluminum powder, and nickel powder; conductive whiskers such as zinc oxide whiskers and potassium titanate whiskers; conductive metal oxide such as titanium oxide; polyphenylene derivatives, or the like may be used.

The solvent of the negative electrode slurry may include water or an organic solvent such as NMP and alcohol, and may be used in an amount such that desirable viscosity is obtained when the negative electrode active material, the binder, and the conductive material are included. For example, the solvent of the negative electrode slurry may be included in an amount such that a concentration of solid content in the slurry including the positive electrode active material, the binder, and the conductive material is 50 wt% to 75 wt%, preferably 50 wt% to 65 wt%.

The separator separates the positive electrode and the negative electrode and provides a movement path of lithium ions, and any separator may be used as the separator without particular limitation as long as it is typically used in secondary batteries, and particularly, a separator having excellent moisture-retention of an electrolyte as well as low resistance to ion movement in the electrolyte is preferable. Specifically, a porous polymer film, for example, a porous polymer film manufactured using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous non-woven fabric, for example, a non-woven fabric formed of glass fiber having a high melting point, polyethylene terephthalate fiber, or the like may be used. Furthermore, a coated separator including a ceramic component or a polymer component may be used to secure heat resistance or mechanical strength, and the separator having a single layer or multilayer structure may be used.

As the electrolyte, an organic liquid electrolyte, an inorganic liquid electrolyte, a solid polymer electrolyte, a gel-type polymer electrolyte, an inorganic solid electrolyte, a molten-type inorganic electrolyte, or the like that is usable in the manufacture of a lithium secondary battery may be used without particular limitation.

Specifically, the electrolyte may include an organic solvent and a lithium salt.

Any organic solvent may be used without particular limitation as long as it may serve as a medium through which ions involved in an electrochemical reaction of a battery may move. Specifically, as the organic solvent, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2 to C20 hydrocarbon group and may include a double-bond, an aromatic ring or ether bond); amides such as dimethylformamide; dioxolanes such as 1,3-dioxolane; or sulfolanes may be used. Among these solvents, a carbonate-based solvent is preferable, and a mixture of a cyclic carbonate (e.g., ethylene carbonate or propylene carbonate) having a high ionic conductivity and a high dielectric constant and a linear carbonate-based compound having a low viscosity (e.g., ethylmethyl carbonate, dimethyl carbonate, or diethyl carbonate), the mixture which may increase charging/discharging performance of a battery, is more preferable. In this case, the electrolyte may exhibit excellent performance when the cyclic carbonate and the chain carbonate are mixed in a volume ratio of about 1:1 to about 1:9.

Any compound may be used as the lithium salt without particular limitation as long as it may provide lithium ions used in a lithium secondary battery. Specifically, as the lithium salt, LiPF₆, LiClO₄, LiAsF₆, LiBF₄, LiSbF₆, LiAlO₂, LiAlCl₄, LiCF₃SO₃, LiC₄F₉SO₃, LiN (C₂F₅SO₃)₂, LiN(C₂F₅SO₂)₂, LiN (CF₃SO₂)₂. LiCl, LiI, LiB(C₂O₄)₂, or a combination thereof may be used. The lithium salt may be preferably used in a concentration range of 0.1 M to 2.0 M. When the concentration of the lithium salt is in the above range, the electrolyte has suitable conductivity and viscosity, thereby exhibiting excellent performance, and lithium ions may effectively move.

In the electrolyte, in order to improve the lifespan properties of a battery, suppress the decrease in battery capacity, and improve the discharge capacity of the battery, one or more kinds of additives, for example, a halo-alkylene carbonate-based compound such as difluoroethylene carbonate, pyridine, triethylphosphite, triethanolamine, cyclic ether, ethylenediamine, n-glyme, hexamethyl phosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, and the like may be further included. In this case, the additive may be included in an amount of 0.1 wt% to 5 wt% with respect to a total weight of the electrolyte.

### <Lithium secondary battery>

The lithium secondary battery according to the present invention is:
a lithium secondary battery including a positive electrode including a positive electrode active material, a negative electrode including a silicon-based negative electrode active material, a separator, and an electrolyte,
the positive electrode active material includes a lithium composite transition metal oxide on which a cobalt coating layer and a boron coating layer are formed,
the positive electrode active material has a particle strength of 80 MPa to 250 MPa,
the positive electrode active material includes LiOH and Li₂CO₃ on a particle surface, and
a total amount of LiOH and Li₂CO₃ is 0.4 wt% to 1.1 wt% with respect to a total amount of the positive electrode active material.

The lithium secondary battery may be manufactured according to the method for manufacturing a lithium secondary battery described above, and each component may refer to the description of the method for manufacturing a lithium secondary battery described above.

In the lithium secondary battery of the present invention, a cobalt coating layer and a boron coating layer included in a positive electrode active material may be determined using an electron probe micro analyzer (EPMA).

The positive electrode active material may have a particle strength of 80 MPa to 250 MPa, preferably 110 MPa to 230 MPa, more preferably 170 MPa to 200 MPa. When the particle strength is within the above range, cracking of the positive electrode active material upon roll pressing of an electrode is minimized to reduce side reactions with an electrolyte, and an increase rate of resistance of a battery may thus be reduced. The lithium secondary battery of the present invention includes a high-temperature heat treatment in the heat treatment process of forming a cobalt coating layer, and the particle strength may thus be achieved. Specifically, the forming of a cobalt coating layer may be performed in two stages, high temperature (first) and low temperature (second), and the lattice structure is recrystallized during the high-temperature heat treatment, and accordingly, the particle strength may thus be achieved.

The positive electrode active material includes LiOH and Li₂CO₃ as residual lithium by-products on a surface of particles, and a total amount of LiOH and Li₂CO₃ is 0.4 wt% to 1.1 wt%, preferably 0.45 wt% to 1 wt%, more preferably 0.5 wt% to 0.8 wt%, with respect to a total amount of the positive electrode active material. When the total amount of LiOH and Li₂CO₃ satisfies the above range, capacity reduction due to loss of available lithium may not be significant and efficiency may be reduced. In the lithium secondary battery of the present invention, such an amount of lithium by-products may be present as the heat treatment is performed at 400 °C to 500 °C in the boron coating process of the step (3). The amounts of LiOH and Li₂CO₃ may be determined through pH titration of the positive electrode active material.

The positive electrode active material is formed of secondary particles in which primary particles are aggregated, and the primary particles have an average particle diameter of 0.4 um to 1 um, preferably 0.4 um to 0.8 um. When the average particle diameter of the primary particles satisfies the above range, it is preferable in that an amount of fine powder generated due to particle breakage upon electrode roll pressing is decreased to reduce a specific surface area that may react with an electrolyte, and thus, battery performance may be improved. The lithium secondary battery of the present invention includes a high-temperature heat treatment in the heat treatment process of forming a cobalt coating layer, and the particle size of primary particles may thus be achieved.

The positive electrode active material may have an average particle diameter D₅₀ of 8 um to 20 um. When the average particle diameter is within the above range, particle breakage upon electrode roll pressing may be minimized.

The lithium secondary battery according to the present invention may be applied to portable devices such as a mobile phone, a laptop computer, and a digital camera, and to electric cars such as a hybrid electric vehicle (HEV).

According to another embodiment of the present invention, a battery module including the lithium secondary battery as a unit cell, and a battery pack including the same are provided.

The battery module or the battery pack may be used as a power source of one or more medium-and-large-sized devices, for example, a power tool, an electric car such as an electric vehicle (EV), a hybrid electric vehicle (HEV), and a plug-in hybrid electric vehicle (PHEV), or a power storage system.

### MODE FOR CARRYING OUT THE INVENTION

Hereinafter, examples of the present invention will be described in detail in such a manner that it may easily be performed by a person with ordinary skill in the art to which the present invention pertains.

### [Examples and Comparative Examples: Preparation of positive electrode active material]

### Example 1.

A precursor having a composition of Ni_{0.8}Co_{0.1}Mn_{0.1}(OH)₂ and LiOH were added to a Henschel mixer (700 L) in an amount such that a molar ratio of (Ni+Co+Mn) and Li was 1:1.03, and mixed for 20 minutes at a speed of 400 rpm in the center. The mixed powder was placed in an alumina crucible having a size of 330 mm × 330 mm, and heat treated at 750 °C for 12 hours in an oxygen (O₂) atmosphere to prepare a lithium composite transition metal oxide having a composition of Li_{1.0}Ni_{0.8}Co_{0.1}Mn_{0.1}O₂.

Thereafter, the prepared lithium composite transition metal oxide was dry mixed with Co(OH)₂ in an amount of 1.5 wt% with respect to a total weight of the lithium composite transition metal oxide. The mixture was subjected to a first heat treatment at 670 °C for 4 hours in an air atmosphere, and a second heat treatment for 2 hours after lowering the temperature to 600 °C to prepare a lithium composite transition metal oxide on which a cobalt coating layer is formed. This was dry mixed with H₃BO₃ in an amount of 0.2 wt% with respect to a total weight of the lithium composite transition metal oxide on which the cobalt coating layer was formed and heat treated at 450 °C for 7 hours to prepare a positive electrode active material on which a boron coating layer is formed.

### Example 2.

A positive electrode active material was prepared in the same manner as in Example 1, except that the amount of Co(OH)₂ in Example 1 was changed to 0.8 wt%.

### Example 3.

A positive electrode active material was prepared in the same manner as in Example 1, except that the amount of Co(OH)₂ in Example 1 was changed to 0.3 wt%.

### Example 4.

A positive electrode active material was prepared in the same manner as in Example 1, except that the heat treatment was performed at 630 °C for 6 hours instead of the first heat treatment and the second heat treatment when forming a cobalt coating layer in Example 1.

### Comparative Example 1.

A positive electrode active material was prepared in the same manner as in Example 1, except that the heat treatment temperature was lowered to 380 °C when forming a boron coating layer in Example 1.

### Comparative Example 2.

A positive electrode active material was prepared in the same manner as in Example 1, except that the heat treatment temperature was lowered to 300 °C when forming a boron coating layer in Example 1.

### Comparative Example 3.

A positive electrode active material was prepared in the same manner as in Example 1, except that the heat treatment temperature was increased to 530 °C when forming a boron coating layer in Example 1.

### Comparative Example 4.

A positive electrode active material was prepared in the same manner as in Example 1, except that the heat treatment was performed at 500 °C for 6 hours instead of the first heat treatment and the second heat treatment when forming a cobalt coating layer in Example 1.

### [Experimental examples]

### Experimental Example 1: Measurement of particle size of primary particles

Images of surfaces of positive electrode active materials prepared in Examples 1 to 4, which were observed using a scanning electron microscope (SEM) are shown in FIG. 1. In addition, the particle diameter of primary particles observed in the SEM images was measured, and then arithmetic mean value thereof was calculated and presented in Table 1 below.

**[Table 1]**

| | Example 1 | Example 2 | Example 3 | Example 4 |
|---|---|---|---|---|
| Particle diameter of primary particle (µm) | 0.73 | 0.59 | 0.45 | 0.41 |

From the results of Table 1, it is seen that the primary particles of the positive electrode active material prepared according to an embodiment of the present invention have a particle diameter of 0.4 um or more.

### Experimental Example 2: Evaluation of particle properties

The following particle strength was measured through a method of collecting 3 g of positive electrode active material powder prepared in Examples 1 to 3 and Comparative Examples 1 to 4, and then, using a Micro Compression Testing Machine (Shimadzu Co., Ltd., MCT-W500), measuring the pressure at which particles break while gradually increasing the pressure.

Meanwhile, 3 g of the positive electrode active material powder prepared in Examples 1 to 3 and Comparative Examples 1 to 4 was collected, and then put into a cylindrical metal mold having a diameter of 2 cm, and pressed with a load of 9 tons to obtain cumulative volume-based particle size distribution (PSD), using S-3500 from Microtrac. With respect to a total weight of the positive electrode active material, a generation rate of fine powder having a particle size of 1 um or less was converted into wt%, and then the resulting values are shown in Table 2 below as the generation rate of fine powder.

In addition, PSD analysis results for the positive electrode active material powder of Examples and Comparative Examples before pressing were obtained in the same manner as described above except for the pressing process, and the strength retentions calculated by substituting the results of PSD analysis before and after pressing into the following Equation (a) are shown in Table 2 below.

Equation (a): Strength retention (%) = Volume ratio of mode particle size after pressing / Volume ratio of mode particle size before pressing × 100

**[Table 2]**

| | Examp le 1 | Examp le 2 | Examp le 3 | Compa rativ e Examp le 1 | Compa rativ e Examp le 2 | Compa rativ e Examp le 3 | Compa rativ e Examp le 4 |
|---|---|---|---|---|---|---|---|
| Particle strength (MPa) | 198 | 181 | 176 | 169 | 162 | 159 | 171 |
| Strength retention (%) | 71.7 | 60.0 | 55.1 | 54.9 | 54.7 | 51.6 | 54.8 |
| Incidence rate of fine particles less than 1 µm (%) | 5.3 | 11.5 | 15.7 | 15.8 | 15.9 | 18.6 | 14.1 |

Through the results of Table 2, it is seen that positive electrode active materials having excellent particle strength were prepared in Examples 1 to 3 in which boron coating was performed at 400 °C to 500 °C and the first treatment and the second heat treatment were performed at 550 °C to 700 °C.

Meanwhile, it is seen that positive electrode active materials of Comparative Examples 1 to 3 in which boron coating was performed at a temperature of less than 400 °C or greater than 500 °C have poor particle strength compared to the positive electrode active materials of Examples 1 to 3.

In addition, it is seen that Comparative Example 4 in which the cobalt coating temperature was lowered to 500 °C has significantly deteriorated particle strength compared to Example 1 which was performed in the same conditions except for the cobalt coating temperature. Considering that Comparative Example 4 showed a slightly lower fine powder generation rate than Example 3, but used a much larger amount of cobalt raw material than Example 3, it is seen that controlling the cobalt coating temperature within a range of 550 °C to 700 °C is an important factor in improving the particle strength.

### Experimental Example 3: Measurement of residual lithium amount

5 g of the positive electrode active material powder each prepared in Examples 1 to 4 and Comparative Examples 1 to 4 was dispersed in 100 mL of water, respectively, and then titrated with 0.1 M HCl to measure changes in pH value, thereby obtaining a pH titration curve. A residual amount of LiOH and a residual amount of Li₂CO₃ in each positive electrode active material were calculated using the pH titration curve, and the sum of these values was evaluated as the amount of residual lithium. The measurement results are shown in Table 3 below.

**[Table 3]**

| | Exam ple 1 | Exam ple 2 | Exam ple 3 | Exam ple 4 | Comp arat ive Exam ple 1 | Comp arat ive Exam ple 2 | Comp arat ive Exam ple 3 | Comp arat ive Exam ple 4 |
|---|---|---|---|---|---|---|---|---|
| LiOH (wt%) | 0.35 | 0.33 | 0.32 | 0.30 | 0.28 | 0.20 | 0.14 | 0.25 |
| Li₂CO₃ (wt%) | 0.16 | 0.15 | 0.13 | 0.12 | 0.11 | 0.11 | 0.08 | 0.14 |
| Total amount of residual lithium (wt%) | 0.51 | 0.48 | 0.45 | 0.42 | 0.39 | 0.31 | 0.22 | 0.39 |

From the results in Table 3, it is seen that the positive electrode active materials of Examples 1 to 4 have a residual lithium amount of 0.4 wt% to 1.1 wt%, so that initial efficiency may be reduced without a significant decrease in capacity due to lithium loss.

Meanwhile, it is seen that the positive electrode active materials of Comparative Examples 1 to 3 in which boron coating was performed at a temperature of less than 400 °C or greater than 500 °C and the positive electrode active material of Comparative Example 4 in which cobalt coating was performed at a temperature of less than 550 °C have a residual lithium amount of less than 0.4 wt%.

### Experimental Example 4: Determination of capacity and initial resistance

The positive electrode active materials each prepared in Examples 1 to 4 and Comparative Examples 1 to 4, a conductive material (carbon black), and a binder (polyvinylidene fluoride, PVdF) were mixed in an N-methyl-2-pyrrolidone (NMP) solvent in a weight ratio of 97.5:1.0:1.5 to prepare a positive electrode slurry (solid content: 50 wt%). The positive electrode slurry was applied onto one surface of an aluminum collector, dried at 130 °C, and then roll-pressed to prepare a positive electrode.

A polyethylene-based separator having a thickness of 15 um was disposed between the positive electrode and the lithium metal negative electrodes to manufacture an electrode assembly, and the electrode assembly was placed inside a battery case. Thereafter, an electrolyte was injected into the inside of the case to manufacture a lithium secondary battery. In this case, as the electrolyte, an electrolyte in which 1 M LiPF₆ was dissolved in a mixed organic solvent in which ethylene carbonate (EC) and ethyl methyl carbonate (EMC) were mixed in a volume ratio of 1:2 was injected to prepare half-cells, and capacity and resistance thereof at 0.1 C charge/discharge were measured.

Specifically, the half-cells were charged at a constant current of 0.1 C up to 4.25 V at 25 °C with cut off at 0.05 C. Thereafter, the half-cells were discharged at a constant current of 0.1 C up to 3.0 V to measure initial charge/discharge, and the initial resistance was measured by dividing voltage drop during the initial 10 seconds of discharge by the current value, and the results are shown in Table 4 below.

**[Table 4]**

| Applied positive electrode | Charge capacity (mAh/g) | Discharge capacity (mAh/g) | Efficiency (%) | Initial resistance (Ohm) |
|---|---|---|---|---|
| Example 1 | 229.3 | 203.2 | 88.6 | 25.2 |
| Example 2 | 229.1 | 203.3 | 88.8 | 25.7 |
| Example 3 | 229.4 | 203.0 | 88.5 | 25.5 |
| Example 4 | 228.9 | 202.9 | 88.6 | 25.9 |
| Comparative Example 1 | 232.2 | 208.6 | 89.8 | 25.4 |
| Comparative Example 2 | 234.0 | 211.2 | 90.2 | 24.8 |
| Comparative Example 3 | 225.2 | 195.9 | 87.0 | 29.1 |
| Comparative Example 4 | 227.6 | 200.3 | 88.0 | 27.0 |

Looking at Table 4, it is seen that batteries to which the positive electrode active materials of Examples 1 to 4 in which boron coating was performed at 400 °C to 500 °C after cobalt coating at 550 °C to 700 °C are applied have lower initial resistance and lower initial charge/discharge efficiency than batteries to which the positive electrode active materials of Comparative Examples 1 and 2 in which boron coating was performed at a temperature of less than 400 °C, the positive electrode active material of Comparative Example 3 in which boron coating was performed at a temperature of greater than 500 °C, and the positive electrode active material of Comparative Example 4 in which cobalt coating was performed at a temperature of less than 550 °C are applied. This indicates that it is favorable in that irreversible capacity may be compensated for the silicon-based negative electrode active material, which has a high lithium ion loss rate by an irreversible reaction due to low charge/discharge efficiency.

### Experimental Example 5: Evaluation of lifespan at high temperature

Lifespan at high temperature of the lithium secondary battery including the positive electrode prepared in Experimental Example 4 and the silicon-based negative electrode below was measured.

Specifically, a negative electrode active material (formed of 3 wt% of SiO and 97 wt% of artificial graphite), a binder (SBR-CMC), and a conductive material (carbon black) were added to water as a solvent in a weight ratio of 95:3.5:1.5 to prepare a negative electrode slurry (solid content: 60 wt%) . The negative electrode slurry was applied onto a 6 um-thick copper (Cu) thin film, which is a negative electrode current collector, and dried, and then roll-pressed to prepare a negative electrode.

A polyethylene-based separator having a thickness of 15 um was disposed between the positive electrode to which each of the positive electrode active materials of Examples 1 to 4 and Comparative Examples 1 to 4 was applied and the negative electrode to manufacture an electrode assembly, and the electrode assembly was placed inside a battery case. Thereafter, an electrolyte was injected into the case to manufacture a lithium secondary battery. In this case, as the electrolyte, an electrolyte in which 1 M LiPF₆ was dissolved in a mixed organic solvent in which ethylene carbonate (EC) and ethyl methyl carbonate (EMC) were mixed in a volume ratio of 1:2 was injected to manufacture a lithium secondary battery.

Each of the lithium secondary batteries was charged at 0.5 C up to 4.2 V at 45 °C in a CCCV mode, and discharged at a constant current of 0.5 C up to 3.0 V to measure capacity retention and resistance increase rate during 200 cycles of charge/discharge experiments, and the results are shown in Table 5.

**[Table 5]**

| Applied positive | Capacity retention | Resistance increase |
|---|---|---|
| electrode | (%) | rate (%) |
| Example 1 | 98.1 | 43.2 |
| Example 2 | 96.1 | 61.1 |
| Example 3 | 93.2 | 89.5 |
| Example 4 | 94.7 | 91.4 |
| Comparative Example 1 | 91.3 | 93.5 |
| Comparative Example 2 | 89.9 | 108.2 |
| Comparative Example 3 | 85.6 | 132.4 |
| Comparative Example 4 | 92.5 | 90.0 |

From the results of Table 5, it is seen that in combination with a negative electrode including an Si-based active material, positive electrodes including the positive electrode active materials of Examples 1 to 4 are effective in increasing the capacity retention of a battery and lowering the resistance increase rate at high temperature, compared to positive electrodes including the positive electrode active materials of Comparative Examples 1 to 4.

In addition, comparing the results between Examples, it is seen that even when the boron coating was performed at the same temperature, the positive electrode active material of Example 1 among Examples 1 to 3 in which cobalt coating was in an amount of 1.5 wt%, 0.8 wt%, and 0.3 wt%, respectively, is most favorable in improving high temperature performance.

In addition, it is seen that the positive electrode active material of Example 1 in which the heat treatment was performed in two stages by lowering the heat treatment temperature in the course of the cobalt coating process is favorable in improving high temperature performance, compared to the positive electrode active material of Example 4 in which the heat treatment was performed in a single stage.

Considering the above experimental results, the lithium secondary battery manufactured according to an embodiment of the present invention has excellent output characteristics and lifespan at high temperature.

## Claims

1. A method for manufacturing a lithium secondary battery, comprising steps of:
(1) mixing a transition metal precursor and a lithium source material and then sintering the mixture to prepare a lithium composite transition metal oxide;
(2) mixing the lithium composite transition metal oxide with a cobalt-containing raw material and heat-treating the mixture at 550 °C to 700 °C to form a cobalt coating layer on the lithium composite transition metal oxide;
(3) mixing the lithium composite transition metal oxide on which the cobalt coating layer is formed with a boron-containing raw material and heat-treating the mixture at 400 °C to 500 °C to prepare a positive electrode active material comprising a boron coating layer;
(4) applying the positive electrode active material onto a positive electrode current collector to prepare a positive electrode; and
(5) assembling the positive electrode, the negative electrode comprising a silicon-based negative electrode active material, and a separator, and injecting an electrolyte.

2. The method of claim 1, wherein a difference between the sintering temperature of the step (1) and the heat treatment temperature of the step (2) is less than 100 °C.

3. The method of claim 1, wherein the heat treatment of the step (2) comprises a first heat treatment, and a second heat treatment performed at a lower temperature than the first heat treatment.

4. The method of claim 1, wherein in the step (2), the cobalt-containing raw material is mixed in an amount of 0.5 wt% to 3 wt% with respect to a total amount of the lithium composite transition metal oxide.

5. The method of claim 1, wherein in the step (3), the boron-containing raw material is mixed in an amount of 0.05 wt% to 3 wt% with respect to a total amount of the lithium composite transition metal oxide on which the cobalt coating layer is formed.

6. The method of claim 1, wherein the lithium composite transition metal oxide is represented Formula 1:
[Formula 1] Li₁₊ₓ(NiₐCo_{b}Mn_{c}M_{d})O₂
wherein in Formula 1,
M is at least any one element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
x, a, b, c, and d each satisfy -0.2≤x≤0.2, 0.50≤a<1, 0<b≤0.40, 0<c≤0.40, 0≤d≤0.1, and a+b+c+d=1.

7. The method of claim 1, wherein the silicon-based negative electrode active material is at least any one selected from the group consisting of Si, SiOₓ (0<x<2), and an Si-containing alloy.

8. A lithium secondary battery comprising a positive electrode comprising a positive electrode active material, a negative electrode comprising a silicon-based negative electrode active material, a separator, and an electrolyte,
wherein the positive electrode active material comprises a lithium composite transition metal oxide on which a cobalt coating layer and a boron coating layer are formed,
the positive electrode active material has a particle strength of 80 MPa to 250 MPa,
the positive electrode active material comprises LiOH and Li₂CO₃ on a particle surface, and
a total amount of LiOH and Li₂CO₃ is 0.4 wt% to 1.1 wt% with respect to a total amount of the positive electrode active material.

9. The lithium secondary battery of claim 8, wherein the positive electrode active material is formed of secondary particles in which primary particles are aggregated, and the primary particles have an average particle diameter of 0.4 um to 1 µm.

10. The lithium secondary battery of claim 8, wherein the positive electrode active material has an average particle diameter D₅₀ of 8 um to 20 µm.

11. The lithium secondary battery of claim 8, wherein the lithium composite transition metal oxide is represented Formula 1:
[Formula 1] Li₁₊ₓ(NiₐCo_{b}Mn_{c}M_{d})O₂
wherein in Formula 1,
M is at least any one element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
x, a, b, c, and d each satisfy -0.2≤x≤0.2, 0.50≤a<1, 0<b≤0.40, 0<c≤0.40, 0≤d≤0.1, and a+b+c+d=1.

12. The lithium secondary battery of claim 8, wherein the silicon-based negative electrode active material is at least any one selected from the group consisting of Si, SiOₓ (0<x<2), and an Si-containing alloy.
